# EUROPÄISCHE PATENTSCHRIFT

(11) **EP 0 853 089 B1**
(45) Veröffentlichungstag und Bekanntmachung des Hinweises auf die Patenterteilung: **03.09.2003**
(21) Anmeldenummer: 97122648.5
(22) Anmeldetag: 22.12.1997
(51) Int. Cl.: C08F 8/06

(54) **Verfahren zur Herstellung oxidierter Polyolefinwachse**
Process for the preparation of oxidized polyolefinic resins
Procédé de préparation de résines polyoléfiniques oxydées

(30) Priorität: 14.01.1997 DE 19700892
(43) Veröffentlichungstag der Anmeldung: 15.07.1998
(73) Patentinhaber: BASF AKTIENGESELLSCHAFT, 67056 Ludwigshafen (DE)
(72) Erfinder: Deckers, Andreas, Dr., 55234 Flomborn (DE); Weber, Wilhelm, Dr., 67435 Neustadt (DE); Ebisch, Dietmar, 67069 Ludwigshafen (DE)

(56) Entgegenhaltungen:
- EP-A- 0 002 760
- EP-A- 0 271 261
- EP-A- 0 296 492
- EP-A- 0 474 889
- DE-A- 19 510 909
- FR-A- 1 425 994
- FR-A- 2 101 828

## Beschreibung

Die vorliegende Erfindung betrifft ein Verfahren zur Herstellung oxidierter Polyolefinwachse durch Umsetzung von Polyolefinwachsen mit Sauerstoff oder sauerstoffhaltigen Gasen bei Temperaturen zwischen 140 und 200°C und Drücken zwischen 5 und 200 bar.

Weiterhin betrifft die Erfindung oxidierte Polyolefinwachse erhältlich nach diesem Verfahren sowie die Verwendung dieser oxidierten Polyolefinwachse in oder als Überzugsmassen sowie in oder als Bodenpflegemittel.

Die Oxidation von Polyolefinwachsen mit Sauerstoff oder sauerstoffhaltigen Gasen ist lange bekannt (s. z.B. Kunststoff Handbuch, Bd. 4 , Carl-Hanser-Verlag, München 1969). Im allgemeinen wird das zu oxidierende Polyolefinwachs dazu aufgeschmolzen und dann mit dem Oxidationsgas in Kontakt gebracht. Die Oxidation wird meist in gerührten Autoklaven durchgeführt. Kontinuierliche Verfahren verwenden meist mehrere Autoklaven in kaskadenartiger Anordnung. Der Nachteil dieser Rührkesselkaskaden ist vor allem darin zu sehen, daß die Wachsmoleküle sehr unterschiedliche Verweilzeiten in dem jeweiligen Autoklaven haben und die Oxidationsprodukte demzufolge eine hohe Heterogenität mit Anteilen sehr stark bzw. sehr schwach oxidierter Wachsmoleküle aufweisen.

In der älteren Deutschen Patentanmeldung 19 617 230.6 werden oxidierte Wachse erhältlich durch Oxidation von, mittels Metallocenkatalyse erhältlichen, Polyolefinen sowie Verfahren zu ihrer Herstellung beschrieben. Für die Oxidation dieser Wachse wird auch auf die Möglichkeit hingewiesen, diese Reaktion in einem Rohrreaktor durchzuführen.

Der vorliegenden Erfindung lag nun die Aufgabe zugrunde, ein Verfahren zur Herstellung oxidierter Polyolefinwachse zu finden, welches kontinuierlich betrieben werden kann, gute Raum-Zeit-Ausbeuten liefert und zu Produkten mit enger Säurezahlverteilung führt.

Demgemäß wurde ein Verfahren zur Herstellung oxidierter Polyolefinwachse die abgeleitet sind von Ethylen und/oder Propylen, 1-Buten, 1-Penten, 1-Hexen, 1-Octen, 1-Nonen und/oder 1-Decen, durch Umsetzung von Polyolefinwachsen mit Sauerstoff oder sauerstoffhaltigen Gasen bei Temperaturen zwischen 140 und 200°C und Drücken zwischen 5 und 200 bar, gefunden, welches dadurch gekennzeichnet ist, daß die Oxidationsreaktion kontinuierlich in einem Rohrreaktor mit einem Länge/Durchmesser-verhältnis von 2000 bis 50 000 durchgeführt wird, wobei der Heizmantel des Rohrreaktors mindestens 2 unterschiedliche Temperaturzonen aufweist, das Verhältnis der Strömungsgeschwindigkeiten von Wachs und oxidierendem Gas zwischen 30 und 500 und die mittlere Verweilzeit des Wachses in dem Rohrreaktor zwischen 0.5 und 20 Stunden beträgt, wobei die Umsetzung von durch Metallocenkatalyse hergestellten Polyolefinen ausgeschlossen ist.

Weiterhin wurden neue oxidierte Polyolefinwachse erhältlich nach 5 diesem Verfahren sowie die Verwendung dieser oxidierten Polyolefinwachse in oder als Überzugsmassen sowie in oder als Bodenpflegemittel gefunden.

Die Oxidation der den oxidierten Wachsen zugrunde liegenden Polyolefine kann mit Sauerstoff oder sauerstoffhaltigen Gasen durchgeführt werden. Vorzugsweise verwendet man Luft zur Oxidation der Polyolefine. Zur Unterstützung der Oxidation kann man organische Peroxide, wie z.B. Di- tert. - butylperoxid zugeben; auch die Zugabe von Schwermetallsalzen wie Manganacetat ist denkbar.

Die Wahl der Oxidationstemperatur hängt vom gewünschten Oxidationsgrad, von der Verweilzeit des Wachses im Reaktor sowie von der Art und Menge des Oxidationsgases ab. Temperaturen unter 140°C führen in der Regel zu unakzeptablen Raum-Zeit-Ausbeuten, bei Temperaturen über 200°C besteht zunehmend die Gefahr einer oxidativen Vercrackung der Wachse und damit verbunden von verunreinigtem Oxidationsprodukt und schneller Verschmutzung des Reaktors. Als besonders geeignet haben sich Temperaturen zwischen 150 und 190°C, insbesondere zwischen 160 und 180°C erwiesen.

Besonders gute Raum-Zeit-Ausbeuten erhält man, wenn die Innentemperatur des Rohrreaktors über die gesamte Länge möglichst konstant die gleiche optimale Temperatur aufweist. Dies kann erfindungsgemäß dadurch erreicht werden, daß der Heizmantel des Rohrreaktors mindestens zwei unterschiedliche Temperaturzonen aufweist, wovon die Temperaturzone im ersten Teil des Rohrreaktors auf eine um 5 bis 20°C höhere Temperatur eingestellt wird als die Temperaturzone im hinteren Teil des Reaktors. Auf diese Weise kann eine konstante Innentemperatur erreicht werden.

Der Reaktionsdruck beträgt zwischen 5 und 200 bar, vorzugsweise wird bei einem Druck von 10 bis 60, besonders bevorzugt bei 20 bis 50 bar gearbeitet.

Als Reaktoren können Rohrbündel- oder übliche Hochdruck-Reaktoren verwendet werden, wie sie beispielsweise auch zur Olefinpolymerisation oder -copolymerisation eingesetzt werden. Der Rohrreaktor muß so dimensioniert sein, daß das Wachs eine ausreichende Verweilzeit im Reaktor hat und daß eine ausreichend turbulente Strömung auftritt, wodurch eine ausreichende Durchmischung des zweiphasigen Reaktionsgemisches gewährleistet wird. In der Regel werden Rohrreaktoren mit einem Länge/Durchmesser-Verhältnis von 2000 bis 50 000, vorzugsweise von 5000 bis 30 0000 verwendet. Gute Ergebnisse lassen sich beispielsweise in Rohrreaktoren einer Länge von 200 bis 2000 m, vorzugsweise von 500 bis 1000 m und einem Durchmesser von 2 bis 6 cm, vorzugsweise von 3 bis 5 cm erzielen.

Wichtig für die Balance von guter Raum-Zeit-Ausbeute und geringer oxidativer Vercrackung ist die Verweilzeit des Wachses im Reaktor. Die optimale Verweilzeit hängt wiederum von der Oxidationstemperatur und dem Sauerstoffpartialdruck ab. Besonders gute Ergebnisse werden im allgemeinen bei mittleren Verweilzeiten von 0,5 bis 20 Stunden, vorzugsweise von 1 bis 10 Stunden, besonders bevorzugt von 1 bis 5 Stunden erzielt.

Als Ausgangsstoffe für das erfindungsgemäße Oxidationsverfahren kommen alle üblichen Polyolefinwachse in Betracht, also beispielsweise durch Ziegler- oder Phillipskatalyse oder durch Hochdruckverfahren hergestellte Polyolefinwachse. Die zugrundeliegenden Wachse können direkt einem Polymerisationsverfahren entnommen werden oder durch thermische Spaltung höhermolekularer Olefinpolymerisate erhalten werden.

Gut geeignete Wachse leiten sich beispielsweise von Ethylen und/-oder C₃-C₁₀-Alk-1-enen ab, wie von Propylen, 1-Buten, 1-Penten, 1-Hexen, 1-Hepten, 1-Octen, 1-Nonen und 1-Decen. Vorzugsweise werden als Polyolefinwachse Homo- oder Copolymerisate des Ethylens oder Propylens, besonders bevorzugt solche des Ethylens eingesetzt.

Zur Herstellung der zugrundeliegenden Polyolefinwachse können die Monomeren homopolymerisiert werden, oder in jedem Verhältnis miteinander copolymerisiert werden. Bevorzugte Polyolefine, die den oxidierten Wachsen zugrunde liegen, sind Ethylenhomopolymerisate mit einer Dichte im Bereich von 0,89 bis 0,98 g/cm³, vorzugsweise im Bereich von 0,90 bis 0,96 g/cm³ und einem M_{w}, bestimmt mit der Methode der GPC in 1,2,4-Trichlorbenzol bei 135°C mit Polyethylenoder Polypropylenstandard, im Bereich von 1000 bis 40 000 g/mol, vorzugsweise im Bereich von 2000 bis 20 000 g/mol.

Weiterhin eignen sich als Ausgangspolyolefine Ethylen/C₃- bis C₁₀-Alk-1-en-copolymerisate mit einem Gesamtgehalt an auf das Alk-1-en oder die Alk-1-ene zurückgehenden Struktureinheiten im Copolymeren im Bereich von 0,1 bis 15 mol-%, vorzugsweise im Bereich von 1 bis 10 mol-%, bezogen auf das Copolymere. Bevorzugte Ethylen/Alk-1-en-copolymerisate sind Ethylen/Propylen-Copolymerisate mit einem Gehalt an auf das Propylen zurückgehenden Struktureinheiten im Copolymerisat im Bereich von 0,1 bis 10 mol-%, vorzugsweise im Bereich von 1 bis 5 mol-%, bezogen auf das Copolymerisat. Die Copolymerisate haben im allgemeinen ein M_{w}, bestimmt mit der Methode der GPC wie oben beschrieben, im Bereich von 1000 bis 40 000 g/mol, vorzugsweise im Bereich von 2000 bis 20 000 g/mol.

Weitere bevorzugte Polyolefine, die den oxidierten Wachsen zugrunde liegen können, sind isotaktische Propylen-Homopolymerisate mit einem Pentadengehalt mmmm an isotaktischen Pentaden, bestimmt mit der Methode der ¹³C-NMR-Spektroskopie, im Bereich von 90 bis 98 % und einem Mw, bestimmt mit der Methode der GPC wie oben beschrieben, im Bereich von 1000 bis 40 000 g/mol, vorzugsweise im Bereich von 2000 bis 20 000 g/mol.

Außerdem eigenen sich auch Copolymerisate des Propylens mit Ethylen und /oder C₄- bis C₁₀-Alk-1-enen als Basispolyolefine. Diese Propylencopolymerisate haben üblicherweise einem GesamtGehalt an, auf das Ethylen und/oder die C₄- bis C₁₀-Alk-1-ene zurückgehenden, Struktureinheiten im Copolymeren im Bereich von 0,1 bis 15 mol-%, vorzugsweise im Bereich von 1 bis 10 mol-%, bezogen auf das Copolymere. Bevorzugte Propylencopolymere sind Propylen/Ethylen-Copolymerisate mit einem Gehalt an auf das Ethylen zurückgehenden Struktureinheiten im Copolymerisat im Bereich von 0,1 bis 10 mol-%, vorzugsweise im Bereich von 1 bis 5 mol-%, bezogen auf das Copolymerisat. Die Propylencopolymerisate haben im allgemeinen ein M_{w}, bestimmt mit der Methode der GPC wie oben beschrieben, im Bereich von 1000 bis 40 000 g/mol, vorzugsweise im Bereich von 1000 bis 20 000 g/mol.

Ein weiterer einflußreicher Parameter des erfindungsgemäßen Verfahrens ist das Verhältnis der Strömungsgeschwindigkeiten von Wachs und oxidierendem Gas durch den Rohrreaktor. Dieses Verhältnis beeinflußt sowohl das Maß der Turbulenz und damit der Durchmischung des Reaktionsgemisches als auch die Menge des Oxidationsmittels, die mit dem Wachs in Kontakt kommen kann. Vorteilhafterweise beträgt das Verhältnis der Strömungsgeschwindigkeiten von oxidierendem Gas und Wachs zwischen 30 und 500, besonders bevorzugt zwischen 50 und 300.

Die nach dem erfindungsgemäßen Verfahren herstellbaren oxidierten Polyolefinwachse zeichnen sich durch eine besonders enge Säurezahlverteilung aus. Weiterhin zeigen sie nur sehr geringe Verunreinigungen durch Crackprodukte, sogenannte Black Spots. So ist es beispielsweise möglich, auch Wachse mit hohem Oxidationsgrad ohne signifikanten Anteil solcher Verunreinigungen herzustellen.

Die Säurezahlen (bestimmt nach DIN 53 402) sind ein Maß für den Oxidationsgrad der oxidierten Wachse und korrelieren mit der Dispergierbarkeit der Wachse in Wasser. Im allgemeinen werden daher mittlere bis hohe Säurezahlen angestrebt, wobei sehr hohe Säurezahlen wiederum zu Produkten geringerer Härte führen können.

Nach dem erfindungsgemäßen Verfahren sind z.B. oxidierte Polyolefinwachse mit Säurezahlen zwischen 1 und 150 erhältlich. Für viele Verwendungen sind solche oxidierten Polyolefinwachse mit Säurezahlen zwischen 10 und 50 vorteilhaft, besonders bevorzugt solche mit Säurezahlen zwischen 15 und 35.

Die erfindungsgemäßen Wachse finden beispielsweise Verwendung in oder als Überzugsmassen. Infolge ihrer guten und klumpenfreien Dispergierbarkeit können mit diesen Wachsen besonders gleichmäßige Wachsüberzüge, z.B. auf Zitrusfrüchten oder auf Automobillacken, erhalten werden.

Die gute Dispergierbarkeit erlaubt auch die vorteilhafte Verwendung der erfindungsgemäßen Wachse in oder als Bodenpflegemittel.

### Beispiele:

Die Beispielversuche wurden in einem zweigeteilten Rohrreaktor mit einem Innendurchmesser von 4 cm und einer Gesamtlänge von 700 m durchgeführt. Die beiden Teilrohre gleicher Länge konnten auf unterschiedliche Manteltemperaturen T₁ (1. Teil) und T₂ (2. Teil) eingestellt werden. Als Ausgangsprodukt diente ein Hochdruckpolyethylenwachs einer Dichte von 0,92 g/ml und einer Schmelzviskosität (bei 120°C) von 1000 mm²/s. Die Temperaturen und Strömungsgeschwindigkeiten wurden so gewählt, daß eine Säurezahl von ca. 20 resultierte. Untersucht wurde bei jedem Versuch die Häufigkeit von Black Spots im Produkt.

Die Ergebnisse zeigt die folgende Tabelle

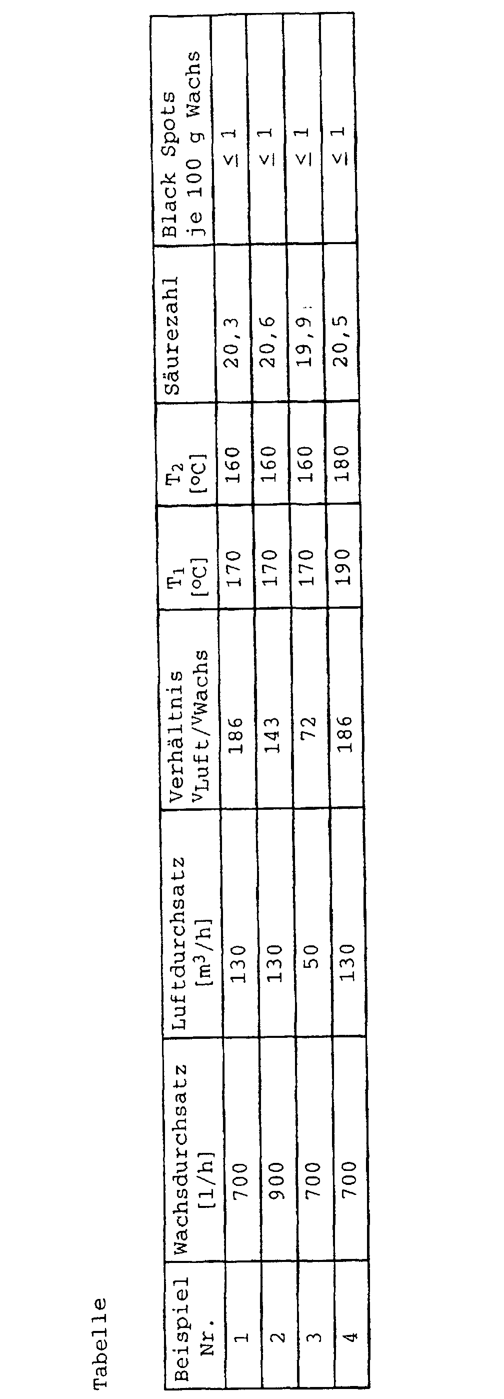

## Patentansprüche

1. Verfahren zur Herstellung oxidierter Polyolefinwachse, die abgeleitet sind von Ethylen und/oder Propylen, 1-Buten, 1-Penten, 1-Hexen, 1-Octen, 1-Nonen und/oder 1-Decen, durch Umsetzung von Polyolefinwachsen mit Sauerstoff oder sauerstoffhaltigen Gasen bei Temperaturen zwischen 140 und 200°C und Drücken zwischen 5 und 200 bar, **dadurch gekennzeichnet, daß** die Oxidationsreaktion kontinuierlich in einem Rohrreaktor mit einem Länge/Durchmesser-Verhältnis von 2000 bis 50 000 durchgeführt wird, wobei der Heizmantel des Rohrreaktors mindestens 2 unterschiedliche Temperaturzonen aufweist, das Verhältnis der Strömungsgeschwindigkeiten von Wachs und oxidierendem Gas zwischen 30 und 500 und die mittlere Verweilzeit des Wachses in dem Rohrreaktor zwischen 0,5 und 20 Stunden beträgt, wobei die Umsetzung von durch Metallocenkatalyse hergestellten Polyolefinen ausgeschlossen ist.

2. Verfahren zur Herstellung oxidierter Polyolefinwachse nach Anspruch 1, **dadurch gekennzeichnet, daß** als Polyolefinwachse Homo- oder Copolymerisate des Ethylens eingesetzt werden.

3. Verfahren zur Herstellung oxidierter Polyolefinwachse nach den Ansprüchen 1 oder 2, **dadurch gekennzeichnet, daß** als sauerstoffhaltiges Gas Luft eingesetzt wird.

4. Verfahren zur Herstellung oxidierter Polyolefinwachse nach den Ansprüchen 1 bis 3, **dadurch gekennzeichnet, daß** die Temperaturzone im ersten Teil des Rohrreaktors auf eine um 5 bis 20°C höhere Temperatur eingestellt wird als die Temperaturzone im hinteren Teil des Reaktors.

5. Oxidierte Polyolefinwachse erhältlich nach einem Verfahren gemäß den Ansprüchen 1 bis 4.

6. Oxidierte Polyolefinwachse nach Anspruch 5 mit einer Säurezahl zwischen 10 und 50.

7. Verwendung oxidierter Polyolefinwachse gemäß Anspruch 5 in oder als Überzugsmassen.

8. Verwendung oxidierter Polyolefinwachse gemäß Anspruch 5 in oder als Bodenpflegemittel.

## Claims

1. A process for preparing oxidized polyolefin waxes which are derived from ethylene and/or propylene, 1-butene, 1-pentene, 1-hexene, 1-octene, 1-nonene and/or 1-decene, by reacting polyolefin waxes with oxygen or oxygen-containing gases at from 140 to 200°C and at pressures of from 5 to 200 bar, which comprises conducting the oxidation reaction continuously in a tube reactor with a length/diameter ratio of from 2 000 to 50 000, the heating jacket of the tube reactor having at least two different temperature zones, the ratio of the flow and the mean residence time of the wax in the tube reactor being from 0.5 to 20 hours, but which excludes the reaction of polyolefins prepared by metallocene catalysis.

2. A process as claimed in claim 1, wherein the polyolefin waxes employed are homopolymers or copolymers of ethylene.

3. A process as claimed in either of claims 1 and 2, wherein air is employed as oxygen-containing gas.

4. A process as claimed in any of claims 1 to 3, wherein the front temperature zone of the tube reactor is set from 5 to 20°C higher than the rear zone.

5. An oxidized polyolefin wax obtainable by a process as claimed in any of claims 1 to 4.

6. An oxidized polyolefin wax as claimed in claim 5 having an acid number of from 10 to 50.

7. The use of an oxidized polyolefin wax as claimed in claim 5 in or as a coating composition.

8. The use of an oxidized polyolefin wax as claimed in claim 5 in or as a floor care composition.

## Revendications

1. Procédé pour la préparation de cires polyoléfiniques oxydées, qui sont dérivées d'éthylène et/ou propylène, 1-butène, 1-pentène, 1-hexène, 1-octène, 1-nonène et/ou 1-décène, par réaction de cires de polyoléfine avec de l'oxygène ou des gaz contenant de l'oxygène à des températures entre 140 et 200°C et des pressions entre 5 et 200 bar, **caractérisé par le fait qu'**on effectue la réaction d'oxydation en continu dans un réacteur tubulaire ayant un rapport longueur/diamètre de 2000 à 50 000, tandis que l'enveloppe chauffant du réacteur tubulaire présente au moins 2 zones de températures différentes, le rapport des vitesses d'écoulement de la cire et du gaz oxydant se situe entre 30 et 500 et la durée de séjour moyenne de la cire dans le réacteur tubulaire se situe entre 0,5 et 20 heures, et tandis qu'est exclue la réaction des polyoléfines préparées par catalyse aux métallocènes.

2. Procédé pour la préparation de cires polyoléfiniques oxydées selon la revendication 1, **caractérisé par le fait qu'**on utilise comme cires polyoléfiniques des homo- ou copolymères d'éthylène.

3. Procédé pour la préparation de cires polyoléfiniques oxydées selon les revendications 1 ou 2, **caractérisé par le fait qu'**on utilise l'air comme gaz contenant de l'oxygène.

4. Procédé pour la préparation de cires polyoléfiniques oxydées selon les revendications 1 à 3, **caractérisé par le fait que** la zone de température dans la première partie du réacteur tubulaire est ajustée à une température de 5 à 20°C au-dessus de la zone de température dans la partie suivante du réacteur.

5. Cires polyoléfiniques oxydées pouvant être obtenues par un procédé selon les revendications 1 à 4.

6. Cires polyoléfiniques oxydées selon la revendication 5, ayant un indice d'acide entre 10 et 50.

7. Utilisation de cires polyoléfiniques oxydées selon la revendication 5 dans des ou comme masses de revêtement.

8. Utilisation de cires polyoléfiniques oxydées selon la revendication 5 dans des ou comme produits d'entretien des sols.
